# EUROPEAN PATENT APPLICATION

(11) **EP 1 967 909 A1**
(43) Date of publication of application: **10.09.2008**
(21) Application number: 08151774.0
(22) Date of filing: 21.02.2008
(51) Int. Cl.: G03G 9/00

(54) **Resin composition**

(30) Priority: 06.03.2007 IT VR20070035
(71) Applicant: Aros S.r.l., 37010 Affi (VR) (IT)
(72) Inventor: Fioratti, Stefano, 25015 Desenzano - Brescia (IT)
(74) Representative: Reniero, Cirillo Silvano

(57) **Abstract**

The present invention relates to a matter composition, and a method for obtaining the same, comprising at least one fluid hardenable resin component and at least one toning component suitable for changing its colour or colour shade depending upon the kind of energy applied to the composition. The matter composition can be advantageously used as a building material or for covering building materials.

## Description

The present invention relates to a matter composition, particularly suitable for obtaining panels or for being applied to building materials, e. g. stony materials, glass, or the like materials, the external features of which, i. e. their colour, opacity, brilliance, can vary depending upon the kind of energy, e. g. heat or light energy, being applied to the composition.

Building materials are classified according to their mechanical features, although of course they can be subjected to working methods to obtain a predetermined final appearance intended to remain unaltered also after prolonged exposure to the inclemency of the weather. To this end, such materials are often coated with suitable coverings to make them weather-proof.

The intrinsic colours of such materials are, however, liable to fade, e. g. to loose brilliance, this phenomenon being especially the consequence of prolonged exposure to UV rays.

Thus, the appearance of most buildings undesirably changes in the course of time.

It has already been proposed the use of toning components in order to obtain objects whose colours change depending upon the energy applied thereto, e. g. in clothes, golf balls, cosmetic compositions, etc., the appearance of which does not undergo degradation in the course of time.

However, in so far as the inventor is aware it was never proposed to use such materials as building materials, such as stone materials (marble, natural stones, granite, etc.), porcelain, gres, resin-quartz, resin-granite, resin-marble, resin-cement, cement-quartz, cement-granite, cement marble agglomerates and the like.

The main object of the present invention is then to provide a new matter composition, the colour or colour shade (hue) of which changes as function of the energy applied thereto.

Another object of the present invention is that of providing a matter composition for obtaining building materials or for being applied to blocks or slabs of building materials in order to fully or partly cover them.

Another object of the present invention is that of providing a matter composition as mentioned above which can be obtained in a simple an economical manner.

These and still other objects, which will become better apparent below, are achieved by a matter composition according to the present invention comprising at least one fluid hardenable resin component and at least one toning component which is suitable for changing its colour or colour shade depending upon the kind of energy to which the composition is exposed.

Advantageously, the resin component comprises a thermosetting resin including a resin selected from the group comprising phenolic, amidic, epossidic, polyurethanic, unsaturated polyester, silicone, alkylic resins.

More advantageously, the toning component is a thermochromic or photochromic pigment, and can include silver bromide or iodide.

Preferably, the amount of resinous component ranges from about 7% to about 99% by weight, and the amount of toning component ranges between about 0.2% and about 10% by weight with respect to the resinous component.

More preferably, a matter composition according to the present invention comprises a hardener component, e. g. selected from the group comprising peroxides, amines, isocyanates, the amount of such a component being in the range between about 0.1 % and about 60% by weight.

A matter composition according to the present invention can also comprise a filler element selected from the group comprising sand, dolomite, mica, feldspars, talc, quartz, granite, calcium carbonate, the amount of such filler element ranging between about 1 % and about 93% by weight.

A series of examples or tests which have been carried out in order to obtain a composition according to the present invention are set forth hereinbelow.

### Example 1

5 g of thermochromic red pigment TM-PD31-3111 produced by New Prismatic Enterprise Co. Ltd. in Taiwan were added to 100 g of polyester resin T8, obtained from Tenax S.p.A. at Volargrne (Verona) - Italy. Such components were stirred until an uniform mixture was obtained. Then, 3.20 g of liquid hardener Butanox M-50, i. e. a methyl ethyl ketone peroxide in dimethylphthalate, a product of the company Akzo Nobel Polymer Chemical b.v. at Amersfoort (Holland) were added, and stirring was continued until a uniform mixture was obtained. Such a mixture was then poured into a cylindrical casting cavity and left to harden.

Thus, a cylinder or disk of resin material was produced which at a temperature of about 20°C had a hue or colour shade of PANTONE 193 U, whereas at a temperature of about 45°C had a hue of PANTONE 663 U.

### Example 2

5 g of photochromic red pigment UV-PD 2119, a product from the company New Prismatic Enterprise Co., Ltd. of Taiwan, were added to 100 g of polyester resin T8. Such components were stirred until a uniform mixture was obtained. Then, 3.20 g of liquid hardener Butanox M-50 were added. Thus, a mixture was obtained which was stirred until it became uniform. The resulting mixture was then poured into a cylindrical receiving casting cavity and left to harden.

Thus, a cylinder or disk of resin material was obtained that when located in an environment lacking in UV radiations or when UV filters were used had a hue of PANTONE 155 U, whereas when subjected to UV radiations it had a hue of PANTONE 207 U.

### Example 3

25 g of quartz sand HN38 obtained from the company Sika at Hostun (France) and 5 g of thermochromic blue pigment TM-PD31-3131 obtained from the company New Prismatic Enterprise Co. of Taiwan were added to 100 g of polyester resin T8. Such components were stirred until an uniform mixture was obtained. Then, 3.20 g of liquid hardener Butanox M-50 were added in order to obtain a mixture which was stirred until it became uniform. The resulting mixture was then poured into a cylindrical casting cavity and left to harden.

Thus, a cylinder or disk of resin material was obtained which, when subjected to a temperature of about 20°C, had a hue of PANTONE 2738 U, whereas, when it was subjected to a temperature of about 45°C, it had a hue of PANTONE 5855 U.

### Example 4

25 g of quartz sand HN38 and 5 g of photochromic blue pigment UV-PD 2114 obtained from the company New Prismatic Enterprise Co. of Taiwan were added to 100 g of polyester resin T8. Such components were stirred until a uniform mixture was obtained, then 3.20 g of liquid hardener Butanox M-50 were added. Thus, a mixture was obtained which was stirred until it became uniform. The resulting mixture was then poured into a cylindrical casting cavity and left to harden.

Thus, a cylinder or disk of resin material was obtained that, when it was located in an environment lacking UV radiations or under a UV filter, had a hue of PANTONE 5445 U, whereas when subjected to UV radiations it had a hue of PANTONE 2738 U.

### Example 5

20 g of hydrated magnesium silicate talc Extra 5/0 obtained from the company Luzenac Val Chisone S.p.A. at Pinerolo (Turin - Italy), 20 g of calcium carbonate obtained from the company ROS Giacomo & Figli S.p.A. at Fratta di Caneva (Pordenone - Italy), and 5 g of thermochromic blue pigment TM-PD31-3131 were added to 100 g of polyester resin T8. Such components were stirred until a uniform mixture was obtained, then 3.20 g of liquid hardener Butanox M-50 were added. Thus, a mixture was obtained which was stirred until it became uniform. The resulting mixture was then poured into a casting cavity and left to harden.

Thus, a cylinder or disk of resin material was obtained that at a temperature of about 20°C had a hue of PANTONE 2748 U, whereas at a temperature of about 45°C had a hue of PANTONE 5845 U.

### Example 6

20 g of talc Extra 5/0, 20 g of calcium carbonate and 5 g of photochromic blue pigment UV-PD 2114 were added to 100 g of polyester resin T8. Such components were mixed until a uniform mixture was obtained, then 3.20 g of liquid hardener Butanox M-50 were added. Thus, a mixture was obtained which was stirred until it became uniform. The resulting mixture was then poured into a cylindrical casting cavity and left to harden.

Thus, a cylinder or disk of resin material was obtained that, when located in an environment lacking UV radiations or under UV filters, had a hue of PANTONE 5855 U, whereas, when exposed to UV radiations, it had a hue of PANTONE 2728 U.

### Example 7

5 g of photochromic red pigrment UV-PD 2119 were added to 100 g of epossidic resin 5010 produced by Tenax SpA of Volargne (Verona - Italy). Such components were mixed until a uniform mixture was obtained, then 25 g of liquid epossidic polyamine hardener MA25H obtained from Tenax SpA. were added. Thus, a mixture was obtained which was stirred until it became uniform. The resulting mixture was then poured into a cylindrical casting cavity and left to harden.

Thus, a cylinder or disk of resin material was obtained that, when located in an environment lacking UV radiations or under UV filters, had a hue of PANTONE 120 U, whereas, when it was subjected to UV radiations, it had a hue of PANTONE 185 U.

### Example 8

5 g of thermochromic red pigment TM-PD 31-3111 were added to 100 g of polyester resin 5010. Such components were stirred until a uniform mixture was obtained, then 25 g of liquid epossidic polyamine hardener MA25H were added. Thus, a mixture was obtained which was stirred until it became uniform. The resulting mixture was then poured into a cylindrical casting cavity and left to harden.

Thus, a cylinder or disk of resin material was obtained, that at a temperature of about 20°C had a hue of PANTONE 185 U, whereas at a temperature of about 45°C had a hue of PANTONE 134 U.

### Example 9

20 g of talc Extra 5/0, 10 g of CAB-O-SIL® hp 60 obtained from the company Cabot Corporation of Boston (United States of America) and 5 g of thermochromic red pigment TM-PD 31-3111 were added to 100 g of polyester resin 5010. Such components were stirred until a uniform mixture was obtained, then 25 g of liquid epossidic polyamine hardener MA25H were added. Thus, a mixture was obtained which was stirred until it became uniform. The resulting mixture was then poured into a cylindrical casting cavity and left to harden.

Thus, a cylinder or disk of resin material was obtained, that at a temperature of about 20°C had a hue of PANTONE 184 U, whereas at a temperature of about 45°C had a hue of PANTONE 420 U.

### Example 10

20 g of talc Extra 5/0, 10 g of CAB-O-SIL® hp 60 and 5 g of photochromic red pigment UV-PD 2119 were added to 100 g of polyester resin 5010. Such components were stirred until a uniform mixture was obtained, then 25 g of liquid epossidic polyamine hardener MA25H were added. Thus, a mixture was obtained which was stirred until it became uniform. The resulting mixture was then poured into a cylindrical casting cavity and left to harden.

Thus, a resinous material disk was obtained, which, when located in an environment lacking in UV radiations or under UV filters, had a hue of PANTONE 413 U, whereas, when it was subjected to UV radiations, it had a hue of PANTONE 206 U.

### Example 11

5 g of photochromic red pigment UV-PD-2119 and 5 g of thermochromic blue pigment TM-PD31-3131 were added to 100 g of polyester resin T8. Such components were stirred until a uniform mixture was obtained, then 3.20 g of liquid hardener Butanox M-50 were added. Thus, a mixture was obtained which was stirred until it became uniform. The resulting mixture was then poured into a cylindrical casting cavity and left to harden.

Thus, a cylinder or disk of resin material was obtained, which, when was located in an environment lacking in UV radiations or under UV filters, had a hue of PANTONE 72 U, whereas when subjected to UV radiations it had a hue of PANTONE 185 U.

### Example 12

3 g of silver bromide were added to 100 g of polyester resin T8. Such components were stirred until a uniform mixture was obtained, then 3.20 g of liquid hardener Butanox M-50 were added. Thus, a mixture was obtained which was stirred until it became uniform. The resulting mixture was then poured into a cylindrical casting cavity and left to harden.

A cylinder or disk of resin material was then obtained, which, when located in an environment lacking in UV radiations or under UV filters, had a hue of PANTONE 587 U, whereas, when subjected to UV radiations, it had a hue of PANTONE 582 U.

### Example 13

3 g of silver iodide were added to 100 g of polyester resin T8. Such components were stirred until a uniform mixture was obtained, then 3.20 g of liquid hardener Butanox M-50 were added. Thus, a mixture was obtained which was stirred until it became uniform. The resulting mixture was then poured into a cylindrical casting cavity and left to harden.

Thus, a cylinder or disk of resin material was obtained, which, when located in an environment lacking UV radiations or under UV filters, had a hue of PANTONE 587 U, whereas, when it was subjected to UV radiations, it had a hue of PANTONE 582 U.

The compositions which were obtained by one of the methods carried out in the Examples 1 to 13 can be used to obtain to stony blocks or slabs or the like materials, from which slabs, panels, blocks can be obtained having an aspect that changes depending upon the kind of energy, e. g. heat or light, applied thereto.

Tests have been carried out to this end, which are described hereinbelow.

### Example 14

A test as that specified in Example 7 was carried out, and the composition was spread onto a granite block, thereby obtaining a block covered by a film of resin material. Such a film, when located in an environment lacking UV radiations or protected from UV by filters, had a hue of PANTONE 120 U, whereas, when exposed to UV radiations, it had a hue of PANTONE 185 U.

### Example 15

A test as that specified in the Example 8 was carried out, and the composition was spread onto a granite block, thereby obtaining a block covered by a film made of a substantially resin material. Such a film at a temperature of about 20°C had a hue of PANTONE 185 U, whereas at a temperature of about 45°C it has a hue of PANTONE 134 U.

A stony block or slab obtained according to a method as described with reference to Examples 14 or 15 can undergo working operations, e. g. sawing, smoothing, lapping, polishing and the like.

With a composition according to the present invention it is possible to obtain either resinous panels or stony blocks or slabs that depending upon e. g. changes in temperatures, or on lighting during a day, change their appearance, in particular their colour or shade of colour (hue) of the whole or part of their exposed surface, thus obtaining a desired aesthetic effect.

The invention as described above is susceptible to numerous modifications and variations within the protection scope as defined by the claims.

## Claims

1. A matter composition comprising at least one hardenable fluid resin component and at least one toning component suitable for changing its colour or shade of colour depending upon the kind of energy applied to the composition.

2. A composition as claimed in claim 1, **characterized in that** said resin component comprises at least one thermosetting resin.

3. A composition as claimed in claim 2, **characterized in that** said at least one thermosetting resin is selected from the group comprising phenolic, amidic, epossidic, polyurethanic, un-saturable polyester, silicone, and alkylic resins.

4. A composition as claimed in any previous claim, **characterized in that** said toning component comprises at least one thermochromic pigment.

5. A composition as claimed in any previous claim, **characterized in that** said at least one toning component comprises at least one photochromic pigment.

6. A composition as claimed in any previous claim, **characterized in that** said at least one toning component comprises silver bromide.

7. A composition as claimed in any previous claim, **characterized in that** said at least one toning component comprises silver iodide.

8. A composition as claimed in any previous claim, **characterized in that** the amount of said at least one resin component ranges between about 7% and about 99% by weight, and the amount of said at least one toning component ranges between about 0.2% and about 10% by weight with respect to said at least one resin component.

9. A composition as claimed in any previous claim, **characterized in that** it comprises at least one hardener component in an amount ranging between about 0.1 % and about 60% by weight.

10. A composition as claimed in claim 9, **characterized in that** said at least one hardener component is selected from the group comprising peroxides, amines, and isocyanates.

11. A composition as claimed in any previous claim, **characterized in that** it comprise at least one extender element selected from the group comprising sand, dolomite, mica, feldspars, talc, quartz, granite, calcium carbonate, the amount of said extender element ranging between about 1 % and about 93% by weight.

12. A method for obtaining a composition as claimed in any previous claim, **characterized in that** it comprises:
- mixing said resinous component and said toning component until a uniform mixture is obtained,
- adding at least one hardener component and stirring until a uniform mixture is obtained, and
- pouring said uniform mixture into a casting cavity.

13. A method as claimed in claim 12, **characterized in that** it comprises adding at least one filler component selected from the group comprising sand, dolomite, mica, feldspars, talc, quartz, granite, and calcium carbonate to the composition, and stirring until a uniform mixture is obtained.

14. A method as claimed in claim 12 or 13, **characterized in that** it comprises:
- applying said composition to a slab or block made of stony material to obtain a slab or block at least partly covered by said composition.

15. A method as claimed in claim 14, **characterized in that** it comprises:
- sawing, lapping, smoothing or polishing said at least partly covered slab or block.

16. A building material suitable for changing its colour or shade of colours when obtained from a composition as claimed in any previous claim 1 to 11.
